# EUROPÄISCHE PATENTANMELDUNG

(11) **EP 4 821 876 A1**
(43) Veröffentlichungstag der Anmeldung: **14.10.2026**
(21) Anmeldenummer: 26160034.0
(22) Anmeldetag: 23.02.2026
(51) Int. Cl.: B66F 9/075, B66F 9/24, B66F 17/00

(54) **FLURFÖRDERZEUG**

(30) Priorität: 07.04.2025 DE 102025113502; 09.04.2025 DE 102025113980
(71) Anmelder: Linde Material Handling GmbH, 63743 Aschaffenburg (DE)
(72) Erfinder: Stromberg, Jochen, 63776 Mömbris (DE); Wuttke, Michael, 63755 Alzenau (DE)
(74) Vertreter: Patentship Patentanwaltgesellschaft

(57) **Zusammenfassung**

Die Erfindung betrifft ein Flurförderzeug (1) mit einem Fahrerarbeitsplatz (F), der einen Fahrersitz (5) und eine Bodenplatte (6) aufweist, wobei das Flurförderzeug (1) eine Totmannschaltereinrichtung (20) aufweist, die ausgebildet ist, das Vorhandensein mindestens eines Beines (BL; BR) einer auf dem Fahrersitz (5) sitzenden Bedienperson in einem oberhalb der Bodenplatte (6) ausgebildeten Fußraum (FM) des Fahrerarbeitsplatzes (F) zu erfassen. Die Totmannschaltereinrichtung (20) weist eine berührungslose Sensoreinrichtung (21) auf, die ausgebildet ist, das Vorhandensein zumindest eines Teils eines Beins (BL; BR) im Fußraum (FM) zu detektieren, wobei die berührungslose Sensoreinrichtung (21) ausgebildet ist, bei einem Detektieren eines Teils des Beines (BL; BR) in dem Fußraum (FM) ein Fahrfreigabesignal an eine einen Fahrantrieb (23) des Flurförderzeugs (1) steuernde Steuereinrichtung (22) des Flurförderzeugs (1) auszugeben.

## Beschreibung

Die Erfindung betrifft ein Flurförderzeug mit einem Fahrerarbeitsplatz, der einen Fahrersitz und eine Bodenplatte aufweist, wobei das Flurförderzeug eine Totmannschaltereinrichtung aufweist, die ausgebildet ist, das Vorhandensein mindestens eines Beines einer auf dem Fahrersitz sitzenden Bedienperson in einem oberhalb der Bodenplatte ausgebildeten Fußraum des Fahrerarbeitsplatzes zu erfassen.

Flurförderzeuge mit einem Fahrerarbeitsplatz, der einen Fahrersitz umfasst, werden von einer auf dem Fahrersitz sitzenden Bedienperson bedient. Für den sicheren Betrieb des Flurförderzeugs ist es erforderlich, mit einer geeigneten Einrichtung abzusichern, dass sich für den Fahrbetrieb des Flurförderzeugs beide Beine der Bedienperson in dem Fahrerarbeitsplatz bzw. dessen Fußraum und somit innerhalb der Fahrzeugkontur des Flurförderzeugs befinden.

Hierzu ist es bekannt, an der Bodenplatte des Fahrerarbeitsplatzes, auf der die auf dem Fahrersitz sitzende Bedienperson während des Betriebs des Flurförderzeugs beiden Beine abstellt, eine Totmannschaltereinrichtung vorzusehen, die einen oder mehrere Totmannschalter umfasst, die jeweils ein Totmannschalterpedal aufweisen, das von der auf dem Fahrersitz sitzenden Bedienperson für den Fahrbetrieb des Flurförderzeugs mit einem oder beiden Beinen betätigt und niedergedrückt werden muss.

Ein gattungsgemäßes Flurförderzeug mit einem Fahrersitz und zwei als Totmannschalterpedalen an der Bodenplatte des Fahrerarbeitsplatzes ausgebildeten Totmannschaltereinrichtung ist aus der EP 2 116 434 A1 bekannt.

Bei bekannten Flurförderzeugen, bei denen als Totmannschaltereinrichtung mindestens ein Totmannschalterpedal an der Bodenplatte des Fahrerarbeitsplatzes angeordnet ist, das von der auf dem Fahrersitz sitzenden Bedienperson für den Fahrbetrieb des Flurförderzeugs mit einem Bein betätigt und niedergedrückt werden muss, ist nachteilig, dass sich für die Bedienperson eine ungünstige Ergonomie ergibt, da bei Fahrten des Flurförderzeugs über längere Strecken durch die erzwungene Körperhaltung bzw. Beinhaltung sowie durch die Notwendigkeit dauerhaft während der Fahrt des Flurförderzeugs mit einem Bein eine Betätigungskraft auf das Totmannschalterpedal zu dessen Betätigung auszuüben, sich Ermüdungserscheinungen und/oder Verkrampfungen im Bein bzw. Fuß der Bedienperson einstellen, die das Totmannschalterpedal betätigt.

Eine ergonomische Anordnung des Totmannschalterpedals an der Bodenplatte des Fahrerarbeitsplatzes wird zwar in der Konstruktionsphase des Flurförderzeugs vorgenommen, jedoch ist diese nicht immer für alle das Flurförderzeug bedienenden Bedienpersonen geeignet, da Menschen sehr unterschiedliche Größen und Proportionen aufweisen und auch unterschiedliche Körperhaltungen bei der Bedienung des Flurförderzeugs favorisieren.

Der vorliegenden Erfindung liegt die Aufgabe zugrunde, ein Flurförderzeug der eingangs genannten Gattung zur Verfügung zu stellen, das hinsichtlich der Ergonomie für die Bedienperson verbessert ist.

Diese Aufgabe wird erfindungsgemäß dadurch gelöst, dass die Totmannschaltereinrichtung eine berührungslose Sensoreinrichtung aufweist, die ausgebildet ist, das Vorhandensein zumindest eines Teils eines Beins im Fußraum zu detektieren, wobei die berührungslose Sensoreinrichtung ausgebildet ist, bei einem Detektieren eines Teils des Beines in dem Fußraum ein Fahrfreigabesignal an eine einen Fahrantrieb des Flurförderzeugs steuernde Steuereinrichtung des Flurförderzeugs auszugeben.

Erfindungsgemäß ist anstelle eines Totmannschalterpedals an der Bodenplatte, zu dessen Betätigung eine Betätigungskraft mit einem Bein bzw. Fuß von der auf den Fahrersitz sitzenden Bedienperson aufgebracht werden muss, als Totmannschaltereinrichtung eine berührungslose Sensoreinrichtung vorgesehen, die das Vorhandensein zumindest eines Teils eines Beins der auf dem Fahrersitz sitzenden Bedienperson im Fußraum des Fahrerarbeitsplatzes detektiert. Die berührungslose Sensoreinrichtung ist hierbei derart im Flurförderzeug positioniert, dass die Sensoreinrichtung nur aktiviert werden kann, wenn sich das betreffende Bein, beispielweise der Unterschenkel, bzw. der betreffende Fuß im Fußraum des Fahrerarbeitsplatzes und somit innerhalb der Fahrzeugkontur befindet.

Die berührungslose Sensoreinrichtung ist ausgebildet, bei einem Detektieren eines Teils des Beines, beispielsweise eines Unterschenkels oder des Fußes des Beines, in dem Fußraum ein Fahrfreigabesignal an eine den Fahrantrieb des Flurförderzeugs steuernde Steuereinrichtung des Flurförderzeugs auszugeben. Damit wird sichergestellt, dass sich für den Fahrbetrieb des Flurförderzeugs das entsprechende Bein der auf dem Fahrersitz sitzenden Bedienperson in dem Fußraum des Fahrerarbeitsplatzes und somit innerhalb der Fahrzeugkontur befindet.

Die berührungslose Sensoreinrichtung benötigt keine Betätigungskraft, die mit einem Bein bzw. Fuß von der auf den Fahrersitz sitzenden Bedienperson aufgebracht werden muss, und ermöglicht es, dass die auf dem Fahrersitz sitzende Bedienperson ein Bein in entspannter Lage und in verschiedenen Positionen bzw. Stellungen vor die berührungslose Sensoreinrichtung halten kann, um das Fahrfreigabesignal zu bewirken, wodurch sich eine verbesserte Ergonomie und ein erhöhter Komfort für die das Flurförderzeug bedienende Bedienperson erzielen lässt.

Gemäß einer vorteilhaften Ausgestaltungsform der Erfindung ist die berührungslose Sensoreinrichtung ausgebildet, bei einem Nicht-Detektieren eines Teils des Beines in dem Fußraum ein Fahrverhinderungssignal an die den Fahrantrieb des Flurförderzeugs steuernde Steuereinrichtung des Flurförderzeugs auszugeben. Dadurch wird die Betriebssicherheit des Flurförderzeugs erhöht, da ein Fahrbetrieb des Flurförderzeugs nur ermöglicht wird, wenn die berührungslose Sensoreinrichtung bei Detektieren eines Beins im Fußraum des Fahrerarbeitsplatzes ein Fahrfreigabesignal ausgibt.

Gemäß einer vorteilhaften Ausgestaltungsform der Erfindung ist an der Bodenplatte eine Fahrpedaleinrichtung angeordnet, die mindestens ein Fahrpedal umfasst, wobei die berührungslose Sensoreinrichtung ausgebildet ist, ein auf dem Fahrpedal befindliches Bein zu detektieren. Hierdurch kann in einfacher Weise mit der berührungslosen Sensoreinrichtung detektiert werden, dass sich ein Bein der auf dem Fahrersitz sitzenden Bedienperson im Fußraum des Fahrerarbeitsplatzes befindet.

Gemäß einer vorteilhaften Ausgestaltungsform der Erfindung ist die Fahrpedaleinrichtung als Einpedaleinrichtung ausgebildet, die ein einzelnes Fahrpedal aufweist, wobei die berührungslose Sensoreinrichtung ausgebildet ist, ein auf dem Fahrpedal befindliches Bein zu detektieren. Eine Einpedaleinrichtung weist ein einzelnes Fahrpedal auf, mit dem die Fahrgeschwindigkeit des Flurförderzeugs gesteuert werden kann und das in der Regel mit dem rechten Fuß der auf dem Fahrersitz sitzenden Bedienperson betätigt wird. Die Fahrtrichtung kann bei einem Flurförderzeug mit einer Einpedaleinrichtung mit einem Fahrtrichtungsschalter ausgewählt werden. Mit der berührungslosen Sensoreinrichtung kann hierbei in einfacher Weise detektiert werden, dass sich das rechte Bein der auf dem Fahrersitz sitzenden Bedienperson im Fußraum des Fahrerarbeitsplatzes befindet.

Alternativ oder zusätzlich kann bei einem Flurförderzeug mit einer Einpedaleinrichtung, die ein einzelnes Fahrpedal aufweist, die berührungslose Sensoreinrichtung ausgebildet sein, das Vorhandensein zumindest eines Teils eines Beins in einem seitlich neben dem Fahrpedal befindlichen Pedalfreiraum zu detektieren. Bei einem Flurförderzeug mit einer Einpedaleinrichtung ist in dem seitlich neben dem Fahrpedal befindlichen Pedalfreiraum, der einen Teil des Fußraums des Fahrerarbeitsplatzes bildet, das linke Bein der auf dem Fahrersitz sitzenden Bedienperson abgestellt. Mit der berührungslosen Sensoreinrichtung kann hierbei in einfacher Weise detektiert werden, dass sich das linke Bein der auf dem Fahrersitz sitzenden Bedienperson im Fußraum des Fahrerarbeitsplatzes befindet.

Gemäß einer vorteilhaften Ausgestaltungsform der Erfindung ist die Fahrpedaleinrichtung als Doppelpedaleinrichtung ausgebildet, die ein Vorwärts-Fahrpedal und ein Rückwärts-Fahrpedal aufweist, wobei die berührungslose Sensoreinrichtung ausgebildet ist, ein auf dem Vorwärts-Fahrpedal und/oder ein auf dem Rückwärts-Fahrpedal befindliches Bein zu detektieren. Eine Doppelpedaleinrichtung weist ein Vorwärts-Fahrpedal, mit dem die Vorwärtsfahrt und die Fahrgeschwindigkeit in Vorwärtsfahrtrichtung gesteuert werden kann, und ein Rückwärts-Fahrpedal auf, mit dem die Rückwärtsfahrt und die Fahrgeschwindigkeit in Rückwärtsfahrtrichtung gesteuert werden kann. Das Vorwärts-Fahrpedal wird mit einem Fuß, beispielsweise dem linken oder rechten Fuß, der auf dem Fahrersitz sitzenden Bedienperson betätigt und das Rückwärts-Fahrpedal mit dem anderen Fuß, beispielsweise dem rechten oder linken Fuß, der auf dem Fahrersitz sitzenden Bedienperson betätigt. Mit der berührungslosen Sensoreinrichtung kann hierbei in einfacher Weise detektiert werden, dass sich das rechte Bein oder das linke Bein oder beide Beine der auf dem Fahrersitz sitzenden Bedienperson im Fußraum des Fahrerarbeitsplatzes befindet.

Gemäß einer vorteilhaften Ausgestaltungsform der Erfindung ist an der Bodenplatte eine Bremspedaleinrichtung angeordnet, die mindestens ein Bremspedal umfasst, wobei die berührungslose Sensoreinrichtung ausgebildet ist, ein auf dem Bremspedal befindliches Bein zu detektieren. Mit dem Bremspedal kann eine Bremseinrichtung betätigt werden. Das Bremspedal ist bevorzugt derart angeordnet, dass es mit beiden Beinen der auf dem Fahrersitz sitzenden Bedienperson betätigt werden kann. Sofern das Flurförderzeug mit einem Bremspedal an der Bodenplatte versehen ist, kann mit der berührungslosen Sensoreinrichtung in einfacher Weise detektiert werden, dass sich das rechte oder linke Bein der auf dem Fahrersitz sitzenden Bedienperson im Fußraum des Fahrerarbeitsplatzes befindet.

Gemäß einer vorteilhaften Ausgestaltungsform der Erfindung weist die berührungslose Sensoreinrichtung einen in den Fußraum gerichteten Erfassungsbereich auf. Hierdurch kann mit der berührungslosen Sensoreinrichtung in einfacher Weise ein Bein im Fußraum des Fahrerarbeitsplatzes sicher detektiert werden.

Gemäß einer vorteilhaften Ausgestaltungsform der Erfindung ist die berührungslose Sensoreinrichtung im Fußraum des Fahrerarbeitsplatzes gegenüberliegend zum Fahrersitz angeordnet und weist einen auf die Bodenplatte gerichteten Erfassungsbereich auf. Mit einer derartigen Anordnung der berührungslosen Sensoreinrichtung kann von der berührungslosen Sensoreinrichtung in sicherer Weise ein Unterschenkel bzw. ein Fuß eines entsprechenden Beines der auf dem Fahrersitz sitzenden Bedienperson erfasst werden.

Gemäß einer vorteilhaften Ausgestaltungsform der Erfindung ist die berührungslose Sensoreinrichtung als Reflexionslichtschalter, insbesondere LED-Sensor, oder als Ultraschallsensor oder als Infrarotsensor oder als Lasersensor oder als Induktivsensor oder als Kapazitivsensor oder als Radarsensor oder als Kamera ausgebildet.

Mit einem beispielsweise als LED-Sensor ausgebildeten Reflexionslichtschalter, welcher durch Senden von Licht und durch Empfangen der Reflektion des Lichtes an Schuh oder Bein oder Hosenbein der auf dem Fahrersitz sitzenden Bedienperson die Wegstrecke zu einem im Fußraum befindlichen Bein der auf dem Fahrersitz sitzenden Bedienperson misst, kann über eine Wegmessung und vorgegebene Parameterwerte (Entfernungsbereich des Beins vom LED-Sensor) in einfacher und funktionssicherer Weise ein im Fußraum des Fahrerarbeitsplatzes befindliches Bein der auf dem Fahrersitz sitzenden Bedienperson detektiert werden und das Fahrfreigabesignal ("Bein im Fußraum detektiert") bzw. das Fahrverhinderungssignal ("Bein im Fußraum nicht detektiert") erzeugt und ausgegeben werden.

Gemäß einer vorteilhaften Ausgestaltungsform der Erfindung ist das Flurförderzeug als Gegengewichtsgabelstapler oder als Schubmaststapler oder als Hubwagen ausgebildet. Mit der erfindungsgemäßen berührungslosen Sensoreinrichtung kann bei einem als Gegengewichtsgabelstapler oder als Schubmaststapler oder als Hubwagen ausgebildeten Flurförderzeug, das von einer auf dem Fahrersitz sitzenden Bedienperson bedient wird, eine ergonomisch zu betätigende Totmannschaltereinrichtung erzielt werden.

Mit der Erfindung werden eine Reihe von Vorteilen erzielt.

Die Erfindung mit der als berührungslose Sensoreinrichtung ausgebildeten Totmannschaltereinrichtung ermöglicht eine berührungslose Präsenzüberwachung eines Beins in dem Fußraum des Fahrerarbeitsplatzes des Flurförderzeugs, das von der auf dem Fahrersitz sitzenden Bedienperson bedient wird.

Die Erfindung bietet eine ergonomische Verbesserung und eine Steigerung des Komforts für die auf dem Fahrersitz sitzende und das Flurförderzeug bedienende Bedienperson.

Bei dem erfindungsgemäßen Flurförderzeug muss die auf dem Fahrersitz sitzende Bedienperson lediglich das betreffende Bein, beispielsweise mit dem Unterschenkel oder dem Fuß, in den Erfassungsbereich der berührungslosen Sensoreinrichtung halten, um die Totmannschaltereinrichtung zu aktivieren und das Fahrfreigabesignal zu erzeugen, die Bedienperson kann jedoch das betreffende Bein entspannt, in unterschiedlichen Beinstellungen und ohne Notwendigkeit der Aufbringung einer Betätigungskraft im Fußraum des Fahrerarbeitsplatzes positionieren. Das betreffende Bein kann weiterhin bei der Aktivierung der Totmannschaltereinrichtung im Erfassungsbereich der berührungslosen Sensoreinrichtung bewegt werden, wodurch bei Fahrten des Flurförderzeugs über längere Strecken Ermüdungserscheinungen und/oder Verkrampfungen in dem die Totmannschaltereinrichtung betätigenden Bein der auf dem Fahrersitz sitzenden Bedienperson vorgebeugt werden kann.

Mit der erfindungsgemäßen berührungslosen Sensoreinrichtung kann weiterhin für unterschiedlichste Körperproportionen der Bedienperson und unterschiedlichste Körperhaltungen bzw. Beinhaltungen der auf dem Fahrersitz sitzenden Bedienperson eine ergonomische Betätigung der Totmannschaltereinrichtung ermöglicht werden.

Weitere Vorteile und Einzelheiten der Erfindung werden beispielhaft anhand des in den schematischen Figuren dargestellten Ausführungsbeispiels näher erläutert. Hierbei zeigt
- Figur 1: ein erfindungsgemäßes Flurförderzeug in einer Ansicht auf den Fahrerarbeitsplatz,
- Figur 2: einen Ausschnitt der Figur 1 in einer vergrößerten Darstellung und
- Figur 3: einen Ausschnitt der Figur 2 mit einer Verdeutlichung der Funktionswelse der Totmannschaltereinrichtung.

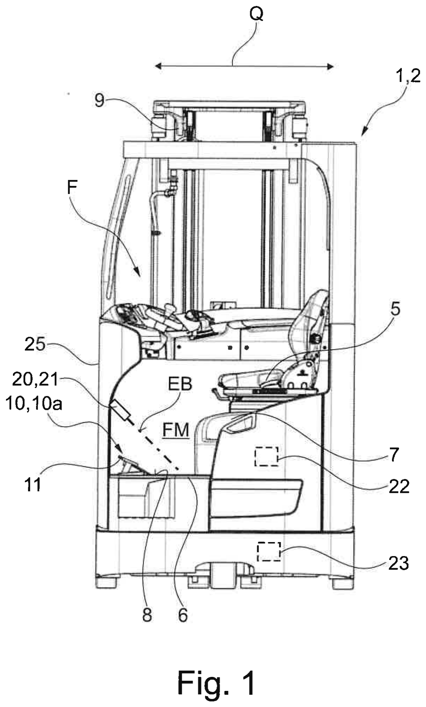

In der Figur 1 ist ein erfindungsgemäßes Flurförderzeug 1 in einer Ansicht auf einen Fahrerarbeitsplatz F dargestellt.

Im dargestellten Ausführungsbeispiel ist das Flurförderzeug 1 als Schubmaststapler 2 ausgebildet.

Der Fahrerarbeitsplatz F weist einen Fahrersitz 5 und eine Bodenplatte 6 auf. Der Fahrersitz 5 ist oberhalb von einer haubenartigen Abdeckung 7 eines Motorraums des Flurförderzeugs 1 angeordnet.

In dem dargestellten Ausführungsbeispiel eines Schubmaststaplers 2 ist die Sitzlängsrichtung des Fahrersitzes 5 in Fahrzeugquerrichtung Q des Schubmaststaplers 2 angeordnet.

Die Bodenplatte 6 ist - in Fahrzeugquerrichtung Q gesehen - vor dem Fahrersitz 5 angeordnet.

Eine auf dem Fahrersitz 5 sitzende Bedienperson kann die Füße FR, FL bzw. Beine BR, BL auf der Bodenplatte 6 aufsetzen bzw. aufstellen. Die Bodenplatte 6 weist hierzu an der Oberseite eine Fußaufstellfläche 8 auf. In vertikaler Richtung oberhalb der Bodenplatte 6 und deren Fußaufstellfläche 8 ist der Fahrerarbeitsplatz F als Fußraum FM ausgebildet. Der Fußraum FM und die Fußaufstellfläche 8 ist bevorzugt ausgebildet, dass eine auf dem Fahrersitz 5 sitzende Bedienperson die Beine BR, BL in den Fußraum FM positionieren kann und die Füße FR, FL auf der Fußaufstellfläche 8 der Bodenplatte 6 aufstellen kann.

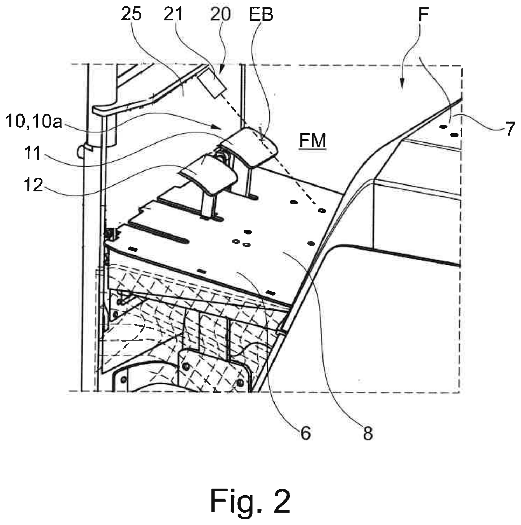

Im dargestellten Ausführungsbeispiel ist an der Bodenplatte 6 - wie in Verbindung mit der Figur 2 näher dargestellt ist - eine Fahrpedaleinrichtung 10 angeordnet.

Die Fahrpedaleinrichtung 10 ist im dargestellten Ausführungsbeispiel als Einpedaleinrichtung 10a ausgebildet, die ein einzelnes Fahrpedal 11 aufweist, das im dargestellten Ausführungsbeispiel mit dem rechten Bein BR der auf dem Fahrersitz 5 sitzenden Bedienperson betätigt und relativ zur Bodenplatte 6 nach unten gedrückt werden kann. Mit dem Fahrpedal 11 kann die Fahrgeschwindigkeit in Vorwärtsfahrtrichtung und in Rückwärtsfahrtrichtung des Flurförderzeugs 1 gesteuert werden.

Bei einem als Schubmaststapler 2 ausgebildeten Flurförderzeug 1 stellt die Vorwärtsfahrtrichtung eine Fahrt des Schubmaststaplers 2 mit dem Fahrerarbeitsplatz F voraus, d.h. in der Figur 1 aus der Zeichenebene heraus, dar und die Rückwärtsfahrtrichtung eine Fahrt des Schubmaststaplers 2 mit einem Hubmast 9 voraus, d.h. in der Figur 1 in die Zeichenebene hinein, dar.

Seitlich neben dem Fahrpedal 11 ist an der Bodenplatte 6 ein Bremspedal 12 einer Bremspedaleinrichtung angeordnet, mit dem eine Bremseinrichtung des Flurförderzeugs 1 gesteuert werden kann. Das Bremspedal 12 kann von einer auf dem Fahrersitz 5 sitzenden Bedienperson mit beiden Beinen, d.h. wahlweise mit dem rechten Bein BR oder dem linken Bein BL, betätigt und relativ zur Bodenplatte 6 nach unten gedrückt werden.

Das Flurförderzeug 1 weist eine Totmannschaltereinrichtung 20 auf, die ausgebildet ist, das Vorhandensein mindestens eines Beines BR bzw. BL einer auf dem Fahrersitz 5 sitzenden Bedienperson in dem oberhalb der Bodenplatte 6 ausgebildeten Fußraum FM des Fahrerarbeitsplatzes F zu erfassen.

Die Totmannschaltereinrichtung 20 weist eine berührungslose Sensoreinrichtung 21 auf, die ausgebildet ist, das Vorhandensein zumindest eines Teils eines Beins BR bzw. BL im Fußraum FM zu detektieren.

Die berührungslose Sensoreinrichtung 21 steht mit einer Steuereinrichtung 22 des Flurförderzeugs 1 in Verbindung, die weiterhin mit der Fahrpedaleinrichtung 10 in Verbindung steht und einen Fahrantrieb 23 des Flurförderzeugs 1 in Abhängigkeit von der Betätigung der Fahrpedaleinrichtung 10 ansteuert.

Die berührungslose Sensoreinrichtung 21 ist ausgebildet, bei einem Detektieren eines Teils des Beines BR bzw. BL in dem Fußraum FM ein Fahrfreigabesignal an die den Fahrantrieb 23 des Flurförderzeugs 1 steuernde Steuereinrichtung 22 des Flurförderzeugs 1 auszugeben. Bei Vorliegen des Fahrfreigabesignal wird von der Steuereinrichtung 22 der Fahrantrieb 23 in Abhängigkeit von der Betätigung der Fahrpedaleinrichtung 10 angesteuert, so dass das Flurförderzeug 1 gemäß dem Fahrerwunsch fährt.

Die berührungslose Sensoreinrichtung 21 ist ausgebildet, bei einem Nicht-Detektieren eines Teils des Beines BR bzw. BL in dem Fußraum FM ein Fahrverhinderungssignal an die den Fahrantrieb 23 des Flurförderzeugs 1 steuernde Steuereinrichtung 22 des Flurförderzeugs 1 auszugeben. Bei Vorliegen des Fahrverhinderungssignal wird von der Steuereinrichtung 22 der Fahrantrieb 23 nicht angesteuert, so dass eine Betätigung der Fahrpedaleinrichtung 10 nicht zu einem Fahrbetrieb des Flurförderzeugs 1 führt.

Im dargestellten Ausführungsbeispiel ist die berührungslose Sensoreinrichtung 21 im Bereich einer den Fahrerarbeitsplatz F und den Fußraum FM begrenzenden vertikalen Außenwand 25 des Flurförderzeugs 1 angeordnet.

Im dargestellten Ausführungsbeispiel ist die berührungslose Sensoreinrichtung 21 an der Außenwand 25 des Flurförderzeugs 1 mit vertikalem Abstand oberhalb der Bodenplatte 6 angeordnet und weist einen in den Fußraum FM gerichteten Erfassungsbereich EB auf.

Im dargestellten Ausführungsbeispiel ist die an der Außenwand 25 des Flurförderzeugs 1 angeordnete berührungslose Sensoreinrichtung 21 im Fußraum FM gegenüberliegend zum Fahrersitz 5 angeordnet, mit vertikalem Abstand oberhalb der Bodenplatte 6 angeordnet und weist einen auf die Bodenplatte 6 schräg nach unten gerichteten Erfassungsbereich EB auf.

Im dargestellten Ausführungsbeispiel ist die berührungslose Sensoreinrichtung 21 derart angeordnet und ausgebildet, einen Teil des auf dem Fahrpedal 11 befindlichen Beines zu detektieren, im dargestellten Ausführungsbeispiel einen Teil des rechten Beins BR der auf dem Fahrersitz 5 sitzenden Bedienperson.

Alternativ oder zusätzlich kann die berührungslose Sensoreinrichtung 21 derart angeordnet und ausgebildet sein, das Vorhandensein zumindest eines Teils eines Beins in einem seitlich neben dem Fahrpedal 11 befindlichen Pedalfreiraum zu detektieren, im dargestellten Ausführungsbeispiel einen Teil des linken Beins BL der auf dem Fahrersitz 5 sitzenden Bedienperson zu detektieren, das in dem Pedalfreiraum neben dem Fahrpedal 11 und dem Bremspedal 12 auf der Bodenplatte 6 positioniert ist. Für die Detektion eines Teils des linken Beins BL der auf dem Fahrersitz 5 sitzenden Bedienperson, das in dem Pedalfreiraum neben dem Fahrpedal 11 und dem Bremspedal 12 positioniert ist, kann alternativ eine, oder eine weitere berührungslose Sensoreinrichtung vorgesehen sein.

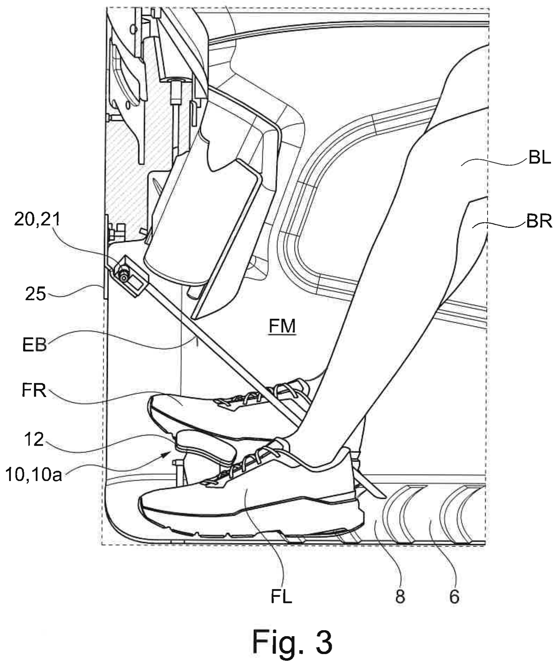

In der Figur 3 ist der Fußraum FM mit dem rechten Bein BR und dem linken Bein BL der auf dem Fahrersitz 5 sitzenden Bedienperson dargestellt, wobei der rechte Fuß FR des rechten Beins BR auf das Fahrpedal 11 aufgesetzt ist und der linke Fuß FL und das linke Bein BL in dem seitlich neben dem Fahrpedal 11 und dem Bremspedal 12 befindlichen Pedalfreiraum positioniert und auf die Bodenplatte 6 aufgesetzt ist.

Der Erfassungsbereich der berührungslosen Sensoreinrichtung 21 ist hierbei auf den Bereich des Sprunggelenks des rechten Beins BR bzw. auf den Bereich des Sprunggelenks des linken Beins BL gerichtet.

Im dargestellten Ausführungsbeispiel ist die berührungslose Sensoreinrichtung 21 als Reflexionslichtschalter, beispielsweise LED-Sensor, ausgebildet.

Der LED-Sensor sendet Licht in den Fußraum FM aus und empfängt die Reflektion des Lichtes, welches bei einem im Fußraum FM befindlichen Bein BR, BL am Bein BR, BL oder Fuß FR, FL oder Schuh oder Hosenbein reflektiert wurde, und kann die Wegstrecke des reflektierten Lichtstrahles messen. Von dem LED-Sensor wird ein Bein BR, BL detektiert und das Fahrfreigabesignal ausgegeben, wenn die gemessene Wegstrecke innerhalb vorgegebener Parameterwerte ist.

Liegt dagegen die gemessene Wegstrecke des reflektierten Lichtstrahles außerhalb der vorgegebenen Parameterwerte, da der Lichtstrahl beispielsweise an der Bodenplatte 6 reflektiert wurde, befindet sich kein Bein BR, BL in dem Fußraum FM und von dem LED-Sensor wird das Fahrverhinderungssignal ausgegeben.

Die Erfindung ist nicht auf das dargestellte Ausführungsbeispiel beschränkt.

Anstelle eines LED-Sensors als berührungslose Sensoreinrichtung 21 kann die berührungslose Sensoreinrichtung 21 als Ultraschallsensor oder als Infrarotsensor oder als Lasersensor oder als Induktivsensor oder als Kapazitivsensor oder als Radarsensor oder als Kamera ausgebildet sein.

Alternativ kann die Fahrpedaleinrichtung 10 als Doppelpedaleinrichtung ausgebildet sein, die ein Vorwärts-Fahrpedal, das von der auf dem Fahrersitz 5 sitzenden Bedienperson mit dem linken Bein BL betätigt werden kann, und ein Rückwärts-Fahrpedal aufweist, das von der auf dem Fahrersitz 5 sitzenden Bedienperson mit dem rechten Bein BR betätigt werden kann. Zwischen dem Vorwärts-Fahrpedal und dem Rückwärts-Fahrpedal ist das Bremspedal 12 angeordnet, das von der auf dem Fahrersitz 5 sitzenden Bedienperson mit beiden Beinen BR, BL, d.h. wahlweise mit dem rechten Bein BR oder dem linken Bein BL, betätigt werden kann.

Die berührungslose Sensoreinrichtung 21 ist bei der Ausführung der Fahrpedaleinrichtung 10 als Doppelpedaleinrichtung ausgebildet, ein auf dem Vorwärts-Fahrpedal befindliches linkes Bein BL oder ein auf dem Rückwärts-Fahrpedal befindliches rechtes Bein BR zu detektieren.

Zudem ist es denkbar, dass bei der Ausführung der Fahrpedaleinrichtung 10 als Doppelpedaleinrichtung eine erste berührungslose Sensoreinrichtung 21 vorgesehen ist, die ein auf dem Rückwärts-Fahrpedal befindliches rechtes Bein BR detektiert, und eine zweite berührungslose Sensoreinrichtung 21 vorgesehen ist, die ein auf dem Vorwärts-Fahrpedal befindliches linkes Bein BL detektiert.

Darüber hinaus ist es möglich, dass die Steuereinrichtung 22 mit einem die Präsenz der Bedienperson auf dem Fahrersitz 5 erfassenden Sensoreinrichtung, beispielsweise einem Sitzschalter in der Sitzfläche des Fahrersitzes 5 und/oder einem Gurtschlossschalters eines Sicherheitsgurtes am Fahrersitz 5, in Verbindung steht. Die Steuereinrichtung 22 ist hierbei bevorzugt derart ausgebildet, dass der Fahrantrieb 23 nur dann freigegeben wird, wenn mittels der Sensoreinrichtung eine auf dem Fahrersitz 5 sitzende Bedienperson erfasst wird und die berührungslose Sensoreinrichtung 21 ein Bein BR bzw. BL im Fußraum FM detektiert und das Fahrfreigabesignal ausgibt.

## Patentansprüche

1. Flurförderzeug (1) mit einem Fahrerarbeitsplatz (F), der einen Fahrersitz (5) und eine Bodenplatte (6) aufweist, wobei das Flurförderzeug (1) eine Totmannschaltereinrichtung (20) aufweist, die ausgebildet ist, das Vorhandensein mindestens eines Beines (BL; BR) einer auf dem Fahrersitz (5) sitzenden Bedienperson in einem oberhalb der Bodenplatte (6) ausgebildeten Fußraum (FM) des Fahrerarbeitsplatzes (F) zu erfassen, **dadurch gekennzeichnet, dass** die Totmannschaltereinrichtung (20) eine berührungslose Sensoreinrichtung (21) aufweist, die ausgebildet ist, das Vorhandensein zumindest eines Teils eines Beins (BL; BR) im Fußraum (FM) zu detektieren, wobei die berührungslose Sensoreinrichtung (21) ausgebildet ist, bei einem Detektieren eines Teils des Beines (BL; BR) in dem Fußraum (FM) ein Fahrfreigabesignal an eine einen Fahrantrieb (23) des Flurförderzeugs (1) steuernde Steuereinrichtung (22) des Flurförderzeugs (1) auszugeben.

2. Flurförderzeug nach Anspruch 1, **dadurch gekennzeichnet, dass** die berührungslose Sensoreinrichtung (21) ausgebildet ist, bei einem Nicht-Detektieren eines Teils des Beines (BL; BR) in dem Fußraum (FM) ein Fahrverhinderungssignal an die den Fahrantrieb (23) des Flurförderzeugs (1) steuernde Steuereinrichtung (22) des Flurförderzeugs (1) auszugeben.

3. Flurförderzeug nach Anspruch 1 oder 2, **dadurch gekennzeichnet, dass** an der Bodenplatte (6) eine Fahrpedaleinrichtung (10) angeordnet ist, die mindestens ein Fahrpedal (11) umfasst, wobei die berührungslose Sensoreinrichtung (21) ausgebildet ist, ein auf dem Fahrpedal (11) befindliches Bein (BL; BR) zu detektieren.

4. Flurförderzeug nach Anspruch 3, **dadurch gekennzeichnet, dass** die Fahrpedaleinrichtung (10) als Einpedaleinrichtung (10) ausgebildet ist, die ein einzelnes Fahrpedal (11) aufweist, wobei die berührungslose Sensoreinrichtung (21) ausgebildet ist, ein auf dem Fahrpedal (11) befindliches Bein zu detektieren.

5. Flurförderzeug nach Anspruch 3, **dadurch gekennzeichnet, dass** die Fahrpedaleinrichtung (10) als Einpedaleinrichtung (10) ausgebildet ist, die ein einzelnes Fahrpedal (11) aufweist, wobei die berührungslose Sensoreinrichtung (21) ausgebildet ist, das Vorhandensein zumindest eines Teils eines Beins (BL; BR) in einem seitlich neben dem Fahrpedal (11) befindlichen Pedalfreiraum zu detektieren.

6. Flurförderzeug nach Anspruch 3, **dadurch gekennzeichnet, dass** die Fahrpedaleinrichtung (10) als Doppelpedaleinrichtung ausgebildet ist, die ein Vorwärts-Fahrpedal und ein Rückwärts-Fahrpedal aufweist, wobei die berührungslose Sensoreinrichtung (21) ausgebildet ist, ein auf dem Vorwärts-Fahrpedal und/oder ein auf dem Rückwärts-Fahrpedal befindliches Bein (BL; BR) zu detektieren.

7. Flurförderzeug nach einem der Ansprüche 1 bis 6, **dadurch gekennzeichnet, dass** an der Bodenplatte (6) eine Bremspedaleinrichtung angeordnet ist, die mindestens ein Bremspedal (12) umfasst, wobei die berührungslose Sensoreinrichtung (21) ausgebildet ist, ein auf dem Bremspedal (12) befindliches Bein (BL; BR) zu detektieren.

8. Flurförderzeug nach einem der Ansprüche 1 bis 7, **dadurch gekennzeichnet, dass** die berührungslose Sensoreinrichtung (21) einen in den Fußraum (FM) gerichteten Erfassungsbereich (EB) aufweist.

9. Flurförderzeug nach einem der Ansprüche 1 bis 8, **dadurch gekennzeichnet, dass** die berührungslose Sensoreinrichtung (21) im Fußraum (FM) gegenüberliegend zum Fahrersitz (5) angeordnet ist und einen auf die Bodenplatte (6) gerichteten Erfassungsbereich (EB) aufweist.

10. Flurförderzeug nach einem der Ansprüche 1 bis 9, **dadurch gekennzeichnet, dass** die berührungslose Sensoreinrichtung (21) als Reflexionslichtschalter, insbesondere LED-Sensor, oder als Ultraschallsensor oder als Infrarotsensor oder als Lasersensor oder als Induktivsensor oder als Kapazitivsensor oder als Radarsensor oder als Kamera ausgebildet ist.

11. Flurförderzeug nach einem der Ansprüche 1 bis 10, **dadurch gekennzeichnet, dass** das Flurförderzeug (1) als Gegengewichtsgabelstapler oder als Schubmaststapler (2) oder als Hubwagen ausgebildet ist.
